# EUROPÄISCHE PATENTSCHRIFT

(11) **EP 2 916 051 B1**
(45) Veröffentlichungstag und Bekanntmachung des Hinweises auf die Patenterteilung: **31.01.2018**
(21) Anmeldenummer: 15155552.1
(22) Anmeldetag: 18.02.2015
(51) Int. Cl.: F16K 11/07, F16K 37/00, F16K 31/04, F16K 31/54, F15B 13/044, F15B 13/08, F16K 27/00

(54) **VENTILSCHEIBE**
Valve block
Bloc de vanne

(30) Priorität: 06.03.2014 DE 102014204069
(43) Veröffentlichungstag der Anmeldung: 09.09.2015
(73) Patentinhaber: ROBERT BOSCH GMBH, 70442 Stuttgart (DE)
(72) Erfinder: Jessen, Soenke, 71732 Tamm (DE)
(74) Vertreter: Maiß, Harald

(56) Entgegenhaltungen:
- DE-A1-102011 005 868
- DE-U1- 8 508 048
- DE-U1-202007 017 894
- JP-A- S59 137 680
- JP-A- 2011 256 993
- US-A- 4 586 539
- US-A1- 2005 062 003
- US-A1- 2009 178 713
- US-B1- 6 444 127

## Beschreibung

Die Erfindung betrifft eine Ventilscheibe gemäß dem Oberbegriff des Patentanspruchs 1 und einen Ventilblock mit derartigen Ventilscheiben.

Bei bekannten als Schieberventil ausgebildeten Ventilscheiben mit elektromechanischer Steuerung eines in der Ventilscheibe enthaltenen Steuerschiebers wird zur translatorischen Verschiebung des Steuerschiebers eine rotatorische Bewegung einer regelbaren Antriebseinrichtung, meist eines Elektromotors, in die benötigte translatorische Bewegung umgewandelt. Dabei ist eine genaue Positionierung des Steuerschiebers sehr wichtig.

Aus der DE 20 2007 017 894 U1 ist ein hydraulisches Steuerventilsystem bekannt, das eine Mehrzahl von nebeneinander angeordneten Steuerventilsegmenten aufweist, wobei jedes Steuerventilsegment eine verschiebbare Ventilstange umfasst. Je nach Stellung der Ventilstange schließt oder öffnet diese eine erste beziehungsweise zweite Leitung in dem Steuerventilsegment. Zur translatorischen Verschiebung der Ventilstange sind an jedem Steuerventilsegment ein Elektromotor und ein Kupplungsmechanismus vorgesehen. Zur Umwandlung der rotatorischen Bewegung des Elektromotors in die erforderliche translatorische Bewegung umfasst der Kupplungsmechanismus eine Zahnstange, die direkt an der Ventilstange befestigt ist oder eine Verlängerung der Ventilstange bildet und vom Elektromotor über ein Zahnrad angetrieben wird. Die DE 20 2007 017 894 U1 betont wiederholt, dass eine große Starrheit beim Festhalten der Ventilstange sehr wichtig ist für eine genaue Verschiebung und für ein Festhalten und eine Stabilisierung der Position der Ventilstange und löst diese Aufgabe durch Verwendung eines Schrittmotors.

Nachteilig daran ist, dass die Stellung der Ventilstange nicht erfasst ist und so die Positionierung der Ventilstange ungenau ist.

Die DE 10 2011 005 868 A1 offenbart eine Ventilsteuervorrichtung, wobei der Stellweg des Ventilschiebers erfasst wird. Dies kann über einen Schrittmotor erfolgen, über den der Ventilschieber verstellt wird, oder über einen Positionssensor.

Dem gegenüber liegt der Erfindung die Aufgabe zu Grunde, eine Ventilscheibe zu schaffen, bei der die Stellung eines Steuerschiebers auf einfache Weise und mit hoher Genauigkeit erfassbar ist.

Diese Aufgabe wird gelöst durch eine Ventilscheibe mit den Merkmalen des Patentanspruchs 1 und durch einen Ventilblock mit den Merkmalen des Patentanspruchs 12.

Vorteilhafte Weiterbildungen der Ventilscheibe sind in den Patentansprüchen 2 bis 11 beschrieben.

Eine Ventilscheibe gemäß der vorliegenden Erfindung hat einen Grundkörper, in dem ein Steuerschieber bewegbar aufgenommen ist. Die Ventilscheibe hat weiter ein Zahnradgetriebe und einen Elektromotor, wobei der Elektromotor in Drehantriebsverbindung mit dem Zahnradgetriebe steht und das Zahnradgetriebe mit dem Steuerschieber bewegungsgekoppelt ist. Erfindungsgemäß ist eine Stellungserfassungseinrichtung zur Erfassung einer Stellung des Steuerschiebers vorgesehen.

Ein Vorteil der Erfindung ist, dass durch die Stellungserfassungseinrichtung eine Stellung des Steuerschiebers zuverlässig erfasst ist. Dies wiederum gewährleistet eine hohe Genauigkeit bei der Positionierung des Steuerschiebers.

Der Grundkörper weist zwei etwa parallele Anlageebenen auf. Weiter ist eine Mittelachse etwa parallel zu den Anlageebenen ausgerichtet. Weiter sind das Zahnradgetriebe, der Elektromotor und eine Zahnstange zwischen den beiden Anlageebenen angeordnet. Anlageebene ist als eine über eine gegenständliche Fläche hinaus vergrößerte Ebene zu verstehen. Damit können das Zahnradgetriebe, der Elektromotor und die Zahnstange platzsparend an einer erfindungsgemäßen Ventilscheibe angeordnet werden und mehrere Ventilscheiben platzsparend zu einem Ventilblock kombiniert werden.

Vorteilhafterweise sind die Stellungserfassungseinrichtung und der Elektromotor an eine zwischen den Anlageebenen angeordnete Lageregeleinrichtung für den Steuerschieber angeschlossen. Der Elektromotor kann als ein Gleichstrommotor ausgebildet sein.

Eine Antriebsachse des Elektromotors ist etwa parallel zu der Mittelachse ausgerichtet. Vorteilhafterweise liegt die Antriebsachse in einer etwa parallel zu der Anlageebene ausgerichteten Ebene der Mittelachse.

Vorteilhafterweise weist das Zahnradgetriebe ein am Elektromotor angebrachtes erstes Eingangszahnrad und ein damit in Eingriff befindliches zweites Eingangszahnrad auf. Insbesondere liegt die Antriebsachse des Elektromotors, um die das erste Eingangszahnrad drehbar ist, in einer Ebene mit der Mittelachse. Ergänzend dazu ist die Antriebsachse etwa parallel zu der Mittelachse ausgerichtet. Weiter vorteilhaft ist ein drittes Eingangszahnrad des Zahnradgetriebes mit dem zweiten Eingangszahnrad drehfest verbunden, so dass sie zusammen um eine gemeinsame dritte Drehachse drehbar sind. Insbesondere ist die dritte Drehachse etwa senkrecht zur Mittelachse und/oder den Anlageebenen ausgerichtet. Weiter vorteilhaft ist die dritte Drehachse etwa parallel zu der ersten Drehachse und/oder der zweiten Drehachse ausgerichtet.

Gemäß einem Ausführungsbeispiel der Erfindung ist das dritte Eingangszahnrad mit dem dritten Ausgangszahnrad in Eingriff.

Das Zahnradgetriebe kann ein erstes Ausgangszahnrad und ein erstes Gegenzahnrad aufweisen. Insbesondere ist das erste Ausgangszahnrad um eine erste Drehachse drehbar und das erste Gegenzahnrad ist um eine zweite Drehachse drehbar. Vorteilhaft sind das erste Ausgangszahnrad und das erste Gegenzahnrad mit der Verzahnung in Eingriff und deren Drehachsen etwa parallel auf gegenüberliegenden Seiten der Zahnstange ausgerichtet. Damit stützen und führen die beiden Zahnräder die Zahnstange und halten die Zähne in Eingriff. Insbesondere sind die erste Drehachse und die zweite Drehachse etwa senkrecht zur Mittelachse ausgerichtet. Weiter vorteilhaft sind das erste Ausgangszahnrad und das erste Gegenzahnrad achsensymmetrisch zur Mittelachse des Steuerschiebers angeordnet, mit der auch die Zahnstange fluchtet.

Vorteilhafterweise verhindert die oben erwähnte umlaufende, insbesondere rotationssymmetrisch bezüglich der Mittelachse ausgebildete, Verzahnung der Zahnstange ein Verkanten zwischen den mit der Zahnstange in Eingriff befindlichen Zahnrädern, insbesondere dem ersten Ausgangszahnrad und dem ersten Gegenzahnrad, und der Zahnstange bei axialer Verdrehung der Zahnstange.

Weiter vorteilhaft wird durch einander genau gegenüberliegende in die Verzahnung der Zahnstange eingreifende Zahnräder keine nennenswerte durch einen Zahneingriff resultierende Querkraft auf die Zahnstange und somit auf den Steuerschieber erzeugt. Somit kann eine Wahl der Zahngeometrie weitgehend unabhängig von den dadurch üblicherweise erzeugten Querkräften erfolgen.

Insbesondere ist das erste Ausgangszahnrad derart mit einem zweiten Ausgangszahnrad drehfest verbunden, dass sie zusammen um die gemeinsame erste Drehachse drehbar sind. Zusätzlich dazu kann das erste Gegenzahnrad derart mit einem zweiten Gegenzahnrad drehfest verbunden sein, dass sie zusammen um die gemeinsame zweite Drehachse drehbar sind, wobei das zweite Ausgangszahnrad mit dem zweiten Gegenzahnrad in Eingriff ist.

Insbesondere ist das erste Ausgangszahnrad derart mit einem dritten Ausgangszahnrad drehfest verbunden, dass sie zusammen um die gemeinsame erste Drehachse drehbar sind.

Insbesondere ist das zweite Ausgangszahnrad und das dritte Ausgangszahnrad auf gegenüberliegenden Seiten der Zahnstange angeordnet. Alternativ dazu können das zweite Ausgangszahnrad und das dritte Ausgangszahnrad auf derselben Seite der Zahnstange angeordnet sein.

Vorteilhafterweise sind die Koppelstange und die Zahnstange etwa in einer Flucht mit der Mittelachse des Steuerschiebers angeordnet. Dies verringert die Querkräfte auf den Steuerschieber. Weiter vorteilhaft ist der Elektromotor benachbart zu der Koppelstange angeordnet. Dies hat den Vorteil einer kompakten platzsparenden Bauweise. Insbesondere ist die Länge des Elektromotors in Antriebsachse gesehen größer als ein Durchmesser des Elektromotors. Dies trägt weiter zu einer kompakten platzsparenden Bauweise bei.

Die Koppelstange kann mindestens einen etwa zylinderförmigen Abschnitt mit einem Durchmesser zwischen 1 mm und 6 mm aufweisen. Durch eine mindestens abschnittweise dünne Koppelstange wird deren Biegeelastizität erhöht, wodurch auftretende Fluchtungsfehler zwischen der Zahnstange und dem Steuerschieber besser ausgleichbar sind und den oben erwähnten Vorteil der Verringerung von Querkräften auf den Steuerschieber hat. Vorteilhafterweise beträgt der Durchmesser des mindestens einen etwa zylinderförmigen Abschnitts 4 mm, wobei die Durchbiegung etwa 0,1 mm beträgt.

Vorteilhafterweise ist die Koppelstange gesondert vom Steuerschieber ausgebildet, wobei die Koppelstange mit dem Steuerschieber drehfest verbunden ist, insbesondere mit dem Steuerschieber verschraubt oder verpresst ist. Dies ist insbesondere von Vorteil für das Anbringen einer Dichtung, beispielsweise eines O-Rings, auf der Koppelstange.

Gemäß einem weiteren Ausführungsbeispiel kann die Koppelstange einstückig mit dem Steuerschieber und/oder der Zahnstange ausgebildet sein.

Insbesondere ist auf mindestens zwei gegenüberliegenden Seiten der Zahnstange eine Verzahnung ausgebildet. Alternativ dazu kann die Zahnstange eine umlaufende, insbesondere rotationssymmetrisch bezüglich der Mittelachse ausgebildete, Verzahnung aufweisen. Vorteilhafterweise ist bei einer Zahnstange mit umlaufender Verzahnung eine Sicherung gegen ein Verdrehen um die Mittelachse nicht erforderlich. Die Fertigung einer solchen umlaufenden Verzahnung ist mit geringem Aufwand und hoher Präzision möglich, insbesondere ist die Verzahnung als Aufsatzstück zum Aufsetzen auf die Zahnstange ausgebildet.

Gemäß einem weiteren Ausführungsbeispiel weist das Zahnradgetriebe ein Doppelzahnrad auf, das ein erstes Stirnrad und ein damit drehfest verbundenes zweites Stirnrad enthält, die zusammen um eine gemeinsame vierte Drehachse drehbar sind. Das dritte Eingangszahnrad ist dabei in Eingriff mit dem zweiten Stirnrad, und das erste Stirnrad ist mit dem dritten Ausgangszahnrad in Eingriff. Vorteilhafterweise ist das erste Stirnrad kleiner als das zweite Stirnrad. Insbesondere ist die vierte Drehachse etwa senkrecht zur Mittelachse ausgerichtet. Weiter vorteilhaft ist die vierte Drehachse etwa parallel zu der ersten Drehachse, der zweiten Drehachse und/oder der dritten Drehachse ausgerichtet.

Insbesondere ist die Summe der Durchmesser des zweiten Ausgangszahnrads und des zweiten Gegenzahnrades größer als die Summe der Durchmesser des ersten Ausgangszahnrads und des ersten Gegenzahnrads. Vorteilhafterweise ist dadurch ein Zwischenraum zwischen dem ersten Ausgangszahnrad und dem ersten Gegenzahnrad erzeugt, in den die Zahnstange passt.

Vorteilhafterweise sind die Zahnräder des Zahnradgetriebes mit Ausnahme des zweiten Eingangszahnrads als Stirnzahnräder ausgebildet. Weiter vorteilhaft sind die Zahnräder des Zahnradgetriebes aus Kunststoff hergestellt, insbesondere aus faserverstärktem Polyamid.

Insbesondere durch die oben beschriebene Ausrichtung der Mittelachse, der Antriebsachse und/oder der Drehachsen - etwa parallel zueinander und etwa senkrecht zu den Anlageebenen - ist eine platzsparende Anordnung der Zahnräder in dem Zahnradgetriebe erreichbar, die beispielsweise beim Einsatz der Ventilscheibe in einem Kraftfahrzeug mit seinem beschränkten Raumangebot erhebliche Vorteile bietet.

Vorteilhafterweise ist mindestens eine Schraubenfeder an einem Ende des Steuerschiebers angeordnet, welche die Koppelstange umgibt, wobei die Schraubenfeder gegen den Steuerschieber verspannt ist. Vorteilhaft verschiebt die mindestens eine Schraubenfeder den Steuerschieber in einem stromlosen Zustand des Elektromotors in eine vordefinierte Stellung, wobei das Zahnradgetriebe ohne Selbsthemmung ausgeführt ist. Weiter vorteilhaft spart diese Anordnung Bauraum ein und ermöglicht eine lange und damit besonders biegsame Koppelstange.

Eine oben erwähnte axiale Verdrehung der Zahnstange kann insbesondere durch ein Ein- und Ausfedern der mindestens einen an dem Steuerschieber angeordneten Schraubenfeder hervorgerufen werden.

Die mindestens eine Schraubenfeder kann in einem abgeschlossenen Federraum aufgenommen sein, welcher an einen Tank anschließbar ist. Die an einem Steuerschieber grundsätzlich auftretende Leckagemenge an Hydraulikflüssigkeit kann so dem Tank zugeführt werden. Der Federraum ist vorteilhafterweise von einem Federgehäuse umschlossen.

Insbesondere ist der Federraum an dem Grundkörper oder an dem Gehäuse vorgesehen, wobei der Federraum mit einem Tank verbindbar ist und/oder der Steuerschieber ist auf beiden Seiten stirnseitig mit einem Tank verbindbar. Vorteilhafterweise wird dabei der Anteil an nicht mit Druckmittel beaufschlagten Flächen, sogenannten Differenzflächen, möglichst klein gehalten. Vorteilhafterweise werden dadurch Druckschwankungen im Tank, insbesondere in einem Tankrücklauf, ausgeglichen, so dass sie praktisch keine Auswirkung auf den Steuerschieber haben. Weiter vorteilhaft ist so die an dem Steuerschieber grundsätzlich auftretende Leckagemenge an Hydraulikflüssigkeit dem Tank zuführbar.

Insbesondere ist eine der Stirnflächen des Steuerschiebers mindestens zu 80% mit Druckmittel beaufschlagt und eine andere der Stirnflächen des Steuerschiebers ist zu 100% mit Druckmittel beaufschlagt. Vorteilhafterweise ist die eine der Stirnflächen des Steuerschiebers ist mindestens zu 90% oder 95% mit Druckmittel beaufschlagt.

Insbesondere ist an dem Federgehäuse mindestens eine Dichtung, vorzugsweise ein O-Ring, vorgesehen, welche die Koppelstange, vorzugsweise deren etwa zylinderförmigen Abschnitt, gleitend anliegend umgibt.

Vorteilhafterweise enthält die Stellungserfassungseinrichtung mindestens einen Permanentmagnet und mindestens einen nach dem Hall-, 3D-Hall- oder dem AMR-Prinzip arbeitenden Sensor. Das AMR-Prinzip nutzt den anisotropen magnetoresistiven Effekt, der sich besonders gut in einer dünnen Schicht (ca. 20 nm) aus Permalloy, einer Legierung aus Nickel (81 %) und Eisen (19 %), beobachten lässt. Es lässt sich feststellen, dass der elektrische Widerstand der Schicht abhängig vom äußeren Magnetfeld ist. Dabei haben nur Magnetfeldkomponenten in der Schichtebene einen merklichen Einfluss auf den Widerstand. Dieser ist am größten, wenn das äußere Magnetfeld in der Stromrichtung oder gegen die Stromrichtung gerichtet ist. Am kleinsten ist der Widerstand, wenn das äußere Magnetfeld senkrecht zur Stromrichtung in der Schichtebene gerichtet ist (siehe Wikipedia: http://de.wikipedia.org/wiki/Anisotroper_magnetoresistiver_Effekt). Die Vorteile der Verwendung des Sensors nach dem AMR-Prinzip sind seine Einfachheit und seine Genauigkeit.

Weiter vorteilhaft ist der Permanentmagnet mit dem zweiten Ausgangszahnrad drehfest verbunden. Alternativ oder ergänzend dazu kann der Permanentmagnet mit dem ersten Ausgangszahnrad, dem dritten Ausgangszahnrad, dem ersten Gegenzahnrad oder dem zweiten Gegenzahnrad drehfest verbunden sein. Insbesondere ist der Sensor in einer zum Detektieren einer Richtung eines magnetischen Feldes des Permanentmagneten geeigneten Lage und Entfernung zu dem Permanentmagneten angeordnet. Alternativ oder ergänzend dazu kann der Permanentmagnet mit der Koppelstange drehfest verbunden sein, wobei der Sensor vorteilhaft in einer zum Detektieren einer Position des Permanentmagneten geeigneten Lage und Entfernung zu dem Permanentmagneten angeordnet ist. Vorteilhafterweise ist der mit der Koppelstange drehfest verbundene Permanentmagnet ringförmig ausgebildet.

Vorteilhafterweise ist der Sensor auf einer Platine angeordnet, die auch die Lageregeleinrichtung enthält, wobei die Platine zwischen den Anlageebenen angeordnet und etwa parallel zu diesen ausgerichtet ist.

Alternativ zu den oben erwähnten Sensoren können auch andere magnetfeldabhängige Sensoren verwendet werden wie beispielsweise Feldplatten, die allerdings bestimmte Einschränkungen im Temperaturbereich aufweisen und in der Herstellung relativ aufwändig sind. Daneben können Sensoren verwendet werden, die magnetisch-resistive Effekte nutzen, die unter der Bezeichnung X-Magneto-Resistive zusammengefasst sind wie beispielsweise Anisotropic Magneto-Resistive (AMR), Giant Magneto-Resistive (GMR), Tunneling Magneto-Resistive (TMR), Colossal Magneto-Resisitive (CMR) und Extraordinary Magneto-Resistive (EMR). Mit dem Giant Magnetic-Inductance (GMI) kann auch ein Sensor verwendet werden, der einen magnetisch induzierten Effekt nutzt (siehe http://www.itwissen.info/definition/lexikon/Magnetfeldsensor-magnetic-field-sensor.html).

Vorteilhafterweise ist mindestens eine etwa parallel zu den Anlageebenen ausgerichtete Abschirmplatte mit einer magnetischen Permeabilität zwischen 50.000 und 140.000 derart zwischen den Anlageebenen angeordnet, dass das magnetische Feld des Permanentmagneten nach außen abgeschirmt ist. Insbesondere kann die Abschirmplatte mit den Anlageebenen zusammenfallen. Vorteilhafterweise ist die Abschirmplatte derart angeordnet, dass der Sensor abgeschirmt ist von externen Magnetfeldern, wie beispielsweise denen benachbarter Ventilscheiben. Dabei darf der Permanentmagnet, dessen Magnetfeldrichtung erfasst werden soll, von dem Sensor, der die Magnetfeldrichtung des Permanentmagneten erfassen soll, nicht durch die Abschirmplatte getrennt sein.

Die Abschirmplatte besteht vorzugsweise aus Mu-Metall (µ Metall), das eine hohe Permeabilität (µr =50.000-140.000) besitzt, die bewirkt, dass sich der magnetische Fluss niederfrequenter Magnetfelder im Material konzentriert. Dieser Effekt führt bei der Abschirmung niederfrequenter oder statischer magnetischer Störfelder zu einer beachtlichen Schirmdämpfung (siehe Wikipedia: http://de.wikipedia.org/wiki/Mu-Metall).

Ein Vorteil einer Messung der Magnetfeldrichtung, das heißt im vorliegenden Fall insbesondere einer Messung einer Verdrehung eines Zahnrades, ist, dass sie günstiger und zuverlässiger ist als beispielsweise eine Messung der magnetischen Feldstärke. Zudem entsteht kein Genauigkeitsnachteil, da außerhalb der Mittelstellung des Steuerschiebers hydraulische Kräfte wirken, welche den Steuerschieber in eine definierte Richtung ziehen, so dass das Zahnradgetriebe spielfrei ist.

Vorteilhafterweise ist ein Gehäuse vorgesehen, das den Elektromotor und das Zahnradgetriebe umschließt, wobei das Gehäuse mit dem Grundkörper verbindbar ist, und das Gehäuse zwei gegenüberliegende Anlageflächen aufweist, die mit den Anlageebenen etwa in einer Ebene liegen.

Ein Ventilblock enthält mehrere erfindungsgemäße Ventilscheiben, wobei die Anlageebenen unmittelbar benachbarter Ventilscheiben zusammenfallen. Insbesondere sind mehrere Ventilscheiben als einzelne Bauteile zu einem Ventilblock zusammengesetzt oder einstückig als ein Monoblock ausgebildet.

Im Folgenden wird ein Ausführungsbeispiel einer erfindungsgemäßen Ventilscheibe in vier Zeichnungen näher erläutert. Es zeigen:
Figur 1 ein Ausführungsbeispiel einer erfindungsgemäßen Ventilscheibe in einer räumlichen Schnittansicht gemäß dem in Figur 2 angegebenen Verlauf A - A,
Figur 2 eine Ansicht der in Figur 1 dargestellten Ventilscheibe mit Blickrichtung entlang der Zahnstange,
Figur 3 einen Längsschnitt eines Federgehäuses, und
Figur 4 eine schematische Darstellung eines Ventilblocks, der mehrere erfindungsgemäße Ventilscheiben enthält.

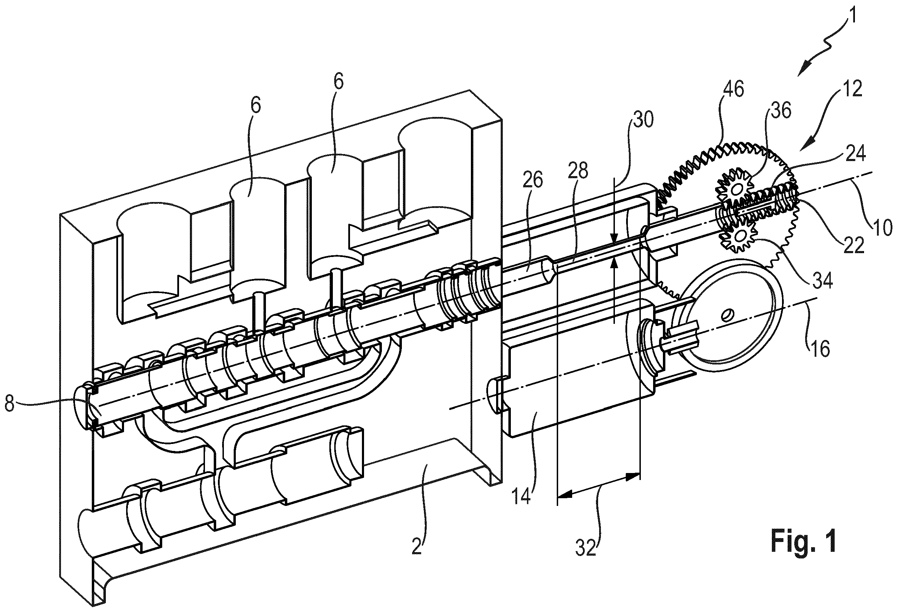

Das in Figur 1 dargestellte Ausführungsbeispiel einer erfindungsgemäßen Ventilscheibe (1) hat einen Grundkörper (2) mit planparallelen Anlageebenen (4). Innerhalb des Grundkörpers (2) ist ein Steuerschieber (8) angeordnet, der entlang einer parallel zu den Anlageebenen (4) ausgerichteten Mittelachse (10) verschiebbar ist und dessen unterschiedliche Durchmesser je nach Stellung des Steuerschiebers (8) mit einem Druckmittel befüllte Leitungen zu Arbeitsanschlüssen (6) öffnen oder schließen.

Stirnseitig an den Steuerschieber (8) schließt sich eine mit dem Steuerschieber (8) drehfest verbundene Koppelstange (26) an, die ihrerseits mit einer Zahnstange (22) drehfest verbunden ist. Der Steuerschieber (8), die Koppelstange (26) und die Zahnstange (22) liegen auf der ihnen gemeinsamen Mittelachse (10) und sind drehfest miteinander verbunden. Die Koppelstange hat einen zylinderförmigen Abschnitt (28) mit einem Durchmesser (30) zwischen 1 mm und 6 mm, wobei eine Länge (32) des etwa zylinderförmigen Abschnitts (28) zwischen 40 mm und 200 mm beträgt.

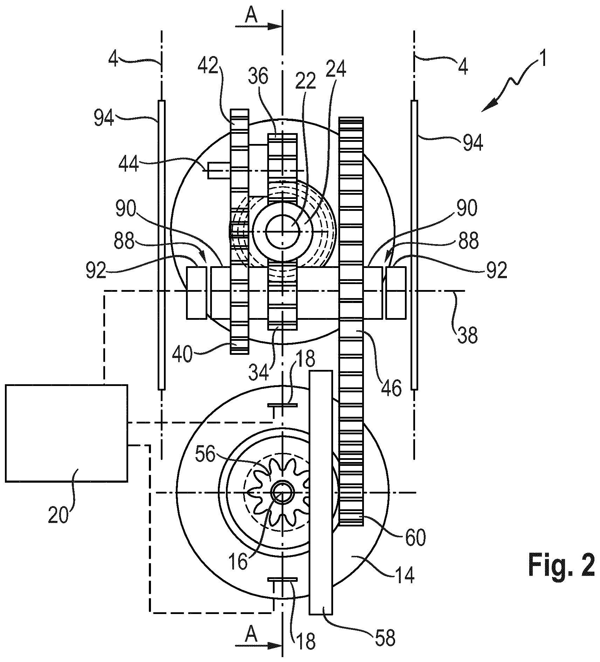

Anhand der in Figur 2 dargestellten Ansicht der Ventilscheibe gemäß Figur 1 mit Blickrichtung auf die Zahnstange (22) wird nun das Zahnradgetriebe (12) beschrieben.

An dem Grundkörper (2) ist ein Elektromotor (14) mit einer parallel zu der Mittelachse (10) ausgerichteten Antriebsachse (16) vorgesehen, wie auch in Figur 1 dargestellt. Der Elektromotor ist über Stromanschlüsse (18) an eine Lageregeleinrichtung (20) für den Steuerschieber (8) angeschlossen.

Auf der Antriebsachse (16) des Elektromotors (14) sitzt ein erstes Eingangszahnrad (56), das ein hier als Kronrad ausgebildetes zweites Eingangszahnrad (58) antreibt. Alternativ dazu kann das erste Eingangszahnrad (56) und das zweite Eingangszahnrad (58) als Kegelradpaar ausgebildet sein. Drehfest mit dem zweiten Eingangszahnrad (58) verbunden und um eine gemeinsame dritte Drehachse (62) drehbar ist ein drittes Eingangszahnrad (60) mit einem dritten Ausgangszahnrad (46) in Eingriff. Die Antriebsachse (16) und die dritte Drehachse (62) stehen senkrecht aufeinander, alternativ dazu können sich die Antriebsachse (16) und die dritte Drehachse (62) in einem beliebigen Winkel schneiden. Ein zweites Ausgangszahnrad (40) und ein erstes Ausgangszahnrad (34) sind drehfest mit dem dritten Ausgangszahnrad (46) verbunden und um eine gemeinsame erste Drehachse (38) drehbar. Das erste Ausgangszahnrad (34) kämmt mit einer Verzahnung (24) einer Zahnstange (22), wodurch eine Rotationsbewegung in eine Translationsbewegung umgewandelt ist. Mit der Zahnstange (22) ist über die Koppelstange (26) der Steuerschieber (8) entlang seiner Mittelachse (10) verschiebbar und so, wie oben erwähnt, die Arbeitsanschlüsse (6) mit Druckmittel beaufschlagbar oder vom Druckmittelfluss trennbar.

Eine Stellungserfassungseinrichtung (88) enthält mindestens einen Permanentmagnet (90) und mindestens einen nach dem Hall-, 3D-Hall- oder dem AMR-Prinzip arbeitenden Sensor (92). In Figur 2 ist dargestellt, dass der Permanentmagnet (90) mit dem zweiten Ausgangszahnrad (40) drehfest verbunden ist, und der Sensor (92) zum Detektieren einer Richtung eines magnetischen Feldes des Permanentmagneten (90) direkt neben dem Permanentmagnet (90) innerhalb der Anlageebenen (4) angeordnet ist. In Figur 2 ist zusätzlich dargestellt, dass der Permanentmagnet (90) mit dem dritten Ausgangszahnrad (46) drehfest verbunden ist, und der Sensor (92) zum Detektieren der Richtung des magnetischen Feldes des Permanentmagneten (90) direkt neben dem Permanentmagnet (90) innerhalb der Anlageebenen (4) angeordnet ist. In der Praxis wird es ausreichen, den Permanentmagnet (90) und den Sensor (92) nur auf einer Seite anzuordnen.

Zur Verdeutlichung der Anschlüsse ist in Figur 2 die Lageregeleinrichtung (20) außerhalb der Anlageebenen (4) dargestellt. Gemäß der Erfindung befindet sich die Lageregeleinrichtung (20) zwischen den Anlageebenen (4), und der Sensor (92) ist auf derselben Platine angeordnet, wie die Lageregeleinrichtung (20). Die Platine ist platzsparend zwischen den Anlageebenen (4) angeordnet und etwa parallel zu diesen ausgerichtet.

Zwischen den Anlageebenen (4) sind Abschirmplatten (94) angeordnet zur Abschirmung des magnetischen Feldes des Permanentmagneten (90) nach außen und/oder zur Abschirmung des Sensors (92) vor magnetischen Feldern von außen.

Mit dem zweiten Ausgangszahnrad (40) in Eingriff steht ein zweites Gegenzahnrad (42), das drehfest mit einem ersten Gegenzahnrad (36) verbunden ist und um eine gemeinsame zweite Drehachse (44) drehbar ist. Das erste Gegenzahnrad (36) kämmt mit der Verzahnung (24) der Zahnstange (22) und so ist die Zahnstange (22) auch von dem ersten Gegenzahnrad (36) angetrieben. Ein erster Durchmesser des ersten Ausgangszahnrads (34) und des ersten Gegenzahnrads (36) und ein zweiter Durchmesser des zweiten Ausgangszahnrads (40) und des zweiten Gegenzahnrads (42) sind gleich groß, wobei die zweiten Durchmesser des zweiten Ausgangszahnrads (40) und des zweiten Gegenzahnrads (42) größer sind als die ersten Durchmesser des ersten Ausgangszahnrads (34) und des ersten Gegenzahnrads (36), damit die Zahnstange (22) zwischen dem ersten Ausgangszahnrad (34) und dem ersten Gegenzahnrad (36) Platz hat.

Insbesondere durch oben beschriebene Ausrichtung der Drehachsen (38, 44, 62) ist eine platzsparende Anordnung der Zahnräder in dem Zahnradgetriebe (12) erreicht, die insbesondere beim Einsatz der Ventilscheibe (1) in einem Kraftfahrzeug mit seinem beschränkten Raumangebot erhebliche Vorteile bietet.

Auf diese Weise und durch die aus Figur 1 ersichtliche zur Mittelachse (10) achsensymmetrische Anordnung des ersten Ausgangszahnrads (34) und des ersten Gegenzahnrads (36) ist die Zahnstange (22) praktisch frei von einer auf sie wirkenden Querkraft antreibbar.

Bei dem in Figur 1 dargestellten Ausführungsbeispiel sind wegen der Schnittdarstellung das zweite Ausgangszahnrad (40) und das zweite Gegenzahnrad (42) nicht dargestellt.

Selbst etwa durch Fertigungs- und/oder Montagetoleranzen auftretende Fluchtungsfehler zwischen der Zahnstange (22) und dem Steuerschieber (8) können bei der erfindungsgemäßen Ventilscheibe keine nennenswerten Querkräfte auf den Steuerschieber (8) übertragen, weil die durch den mindestens einen zylinderförmigen Abschnitt (28) mit reduziertem Durchmesser (30) biegeelastisch ausgebildete Koppelstange (26) keine nennenswerten Querkräfte auf den Steuerschieber (8) überträgt.

Mit diesem Aufbau ist der Steuerschieber (8) zur genauen Positionierung über die Lageregeleinrichtung (20) von dem Elektromotor (14) lagegeregelt verschiebbar.

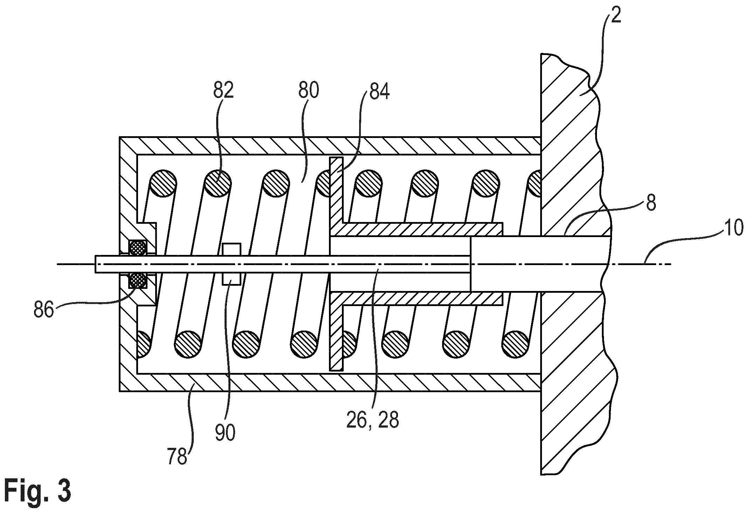

Das in Figur 3 dargestellte Federgehäuse (78) kann bei jedem der zuvor beschriebenen Ausführungsbeispiele einer erfindungsgemäßen Ventilscheibe (1) zum Einsatz kommen. Das Federgehäuse (78) ist an dem Grundkörper (2) angeordnet und umschließt einen Federraum (80) mit einer Schraubenfeder (82), die den Steuerschieber (8) über einen mit dem Steuerschieber (8) verbundenen Federteller (84) in einer vordefinierten Stellung hält. Der Federraum (80) kann alternativ als ein Hohlraum in dem Gehäuse (64) ausgebildet sein, so dass das Federgehäuse (78) als eine Wandung des Hohlraums ausgebildet ist. Bei dem ohne Selbsthemmung ausgeführten Zahnradgetriebe (12) ist so der Steuerschieber (8) in einem stromlosen Zustand des Elektromotors (14) in die vordefinierte Stellung gebracht.

An der Koppelstange (26) ist ein ringförmiger Permanentmagnet (90) angeordnet. Der zu der Stellungserfassungseinrichtung gehörende Sensor zum Detektieren einer Position des Permanentmagneten (90) ist hier nicht dargestellt.

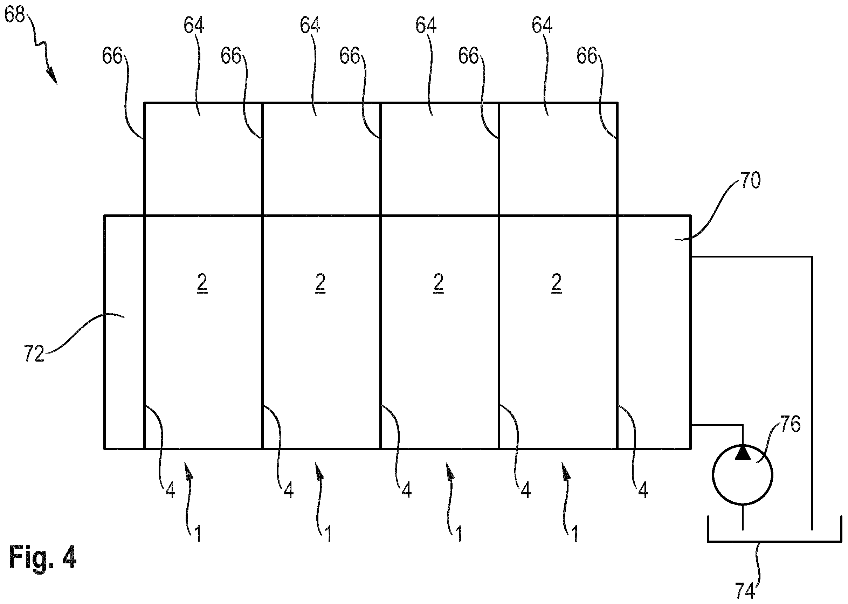

Ein in Figur 4 schematisch dargestellter Ventilblock (68) enthält mehrere erfindungsgemäße Ventilscheiben (1), wobei die Ventilscheiben gemäß dem ersten und/oder dem zweiten Ausführungsbeispiel ausgebildet sein können. Die Anlageebenen (4) unmittelbar aneinander grenzender Ventilscheiben (1) fallen zusammen. Mit jedem Grundkörper (2) der Ventilscheiben (1) ist ein Gehäuse (64) verbunden, das jeweils den Elektromotor (14) und das Zahnradgetriebe (12) umschließt. Das Gehäuse (64) ist von zwei gegenüberliegenden Anlageflächen (66) begrenzt, die mit den Anlageebenen (4) des jeweiligen Grundkörpers (2) etwa in einer Ebene liegen. Um sicherzustellen, dass jeweils die Anlageebenen (4) aneinander anliegen und nicht die Anlageflächen (66), ist in der Praxis der Abstand zwischen den Anlageflächen (66) mit einer Minustoleranz ausgeführt.

Die mehreren Ventilscheiben (1) sind als einzelne Bauteile zu einem Ventilblock (68) zusammengesetzt, können aber auch einstückig als ein Monoblock ausgebildet sein. Eine Anschlussplatte (70) und eine Endplatte (72) bilden einen Abschluss des Ventilblocks (68) zu den Seiten. Über die Anschlussplatte (70) ist der Ventilblock (68) mit dem Tank (74) mit Hydraulikflüssigkeit verbunden, die von einer zugeordneten Pumpe (76) gefördert wird. Der Ventilblock (68) kann erfindungsgemäße Ventilscheiben (1) gemäß jedem der zuvor beschriebenen Ausführungsbeispiele enthalten.

Der Federraum (80) einer jeden Ventilscheibe (1) ist mit dem Tank (74) verbunden. Wie in Figur 3 dargestellt, ist eine der Stirnflächen des Steuerschiebers (8), die in den Federraum (80) hineinragt, durch das in dem Federraum (80) vorhandene Druckmittel beaufschlagt. Da die Koppelstange (26) an dem Steuerschieber (8) angeordnet ist und aus dem Federgehäuse (78) herausgeführt ist, ist die eine Stirnfläche nur zum Teil mit Druckmittel beaufschlagt, insbesondere zu mindestens 80%.

Alternativ oder ergänzend dazu ist ein Steuerschieber (8) auf beiden Seiten stirnseitig mit dem Tank (74) verbunden. Dadurch werden vorteilhafterweise Druckschwankungen im Tank (74), insbesondere in einem Tankrücklauf, ausgeglichen, so dass sie praktisch keine Auswirkung auf den Steuerschieber (8) haben. Eine in Figur 1 auf der linken Seite dargestellte andere der Stirnflächen des Steuerschiebers (8) kann vorteilhafterweise mit dem Tank (74) verbunden sein, wobei die andere Stirnfläche vollständig mit Druckmittel beaufschlagt ist. Je näher der teilweise mit Druckmittel beaufschlagte Anteil an 100% ist, desto weniger Einfluss haben in einem Tankrücklauf herrschende Druckschwankungen auf den Steuerschieber (8). Ein Anteil der nur teilweise mit Druckmittel beaufschlagten anderen Stirnfläche von 90% oder 95% ist deswegen bevorzugt.

Der Federraum (80) ist mit einem die Koppelstange (26) umschließenden in Figur 3 dargestellten O-Ring (86) abgedichtet. Der O-Ring (86) dichtet den Hydraulikbereich mit Druckmittel von einem Motorbereich, in dem der Elektromotor angeordnet ist, ab.

Offenbart ist eine Ventilscheibe, die innerhalb eines Grundkörpers einen Steuerschieber enthält, der entlang einer Mittelachse verschiebbar ist. Durch eine Verschiebung des Steuerschiebers ist eine Verbindung zwischen fluidführenden Leitungen und Arbeitsanschlüssen herstellbar oder trennbar. Die Verschiebung des Steuerschiebers wird erreicht durch ein von einem Elektromotor angetriebenes Zahnradgetriebe, dessen rotatorische Bewegung durch eine Zahnstange in eine translatorische Bewegung umgewandelt ist. Über eine biegeelastische Koppelstange ist der Steuerschieber mit der Zahnstange verbunden und kann so in die gewünschte Stellung verschoben werden. Die Stellung des Steuerschiebers wird durch eine zwischen den Anlageebenen angeordnete Stellungserfassungseinrichtung erfasst.

### Bezugszeichenliste

- 1: Ventilscheibe
- 2: Grundkörper
- 4: Anlageebene
- 6: Arbeitsanschluss
- 8: Steuerschieber
- 10: Mittelachse
- 12: Zahnradgetriebe
- 14: Elektromotor
- 16: Antriebsachse des Elektromotors
- 18: Stromanschluss
- 20: Lageregeleinrichtung
- 22: Zahnstange
- 24: Verzahnung der Zahnstange
- 26: Koppelstange
- 28: etwa zylinderförmiger Abschnitt der Koppelstange
- 30: Durchmesser des zylinderförmigen Abschnitts der Koppelstange
- 32: Länge des zylinderförmigen Abschnitts der Koppelstange
- 34: erstes Ausgangszahnrad
- 36: erstes Gegenzahnrad
- 38: erste Drehachse
- 40: zweites Ausgangszahnrad
- 42: zweites Gegenzahnrad
- 44: zweite Drehachse
- 46: drittes Ausgangszahnrad
- 48: Doppelzahnrad
- 50: erstes Stirnrad des Doppelzahnrads
- 52: zweites Stirnrad des Doppelzahnrads
- 56: erstes Eingangszahnrad
- 58: zweites Eingangszahnrad
- 60: drittes Eingangszahnrad
- 62: dritte Drehachse
- 64: Gehäuse
- 66: Anlagefläche
- 68: Ventilblock
- 70: Anschlussplatte
- 72: Endplatte
- 74: Tank
- 76: Pumpe
- 78: Federgehäuse
- 80: Federraum
- 82: Schraubenfeder
- 84: Federteller
- 86: Dichtung
- 88: Stellungserfassungseinrichtung
- 90: Permanentmagnet
- 92: Sensor
- 94: Abschirmplatte

## Patentansprüche

1. Ventilscheibe mit einem Grundkörper (2), in dem ein Steuerschieber (8) bewegbar aufgenommen ist, und mit einem Zahnradgetriebe (12), und mit einem Elektromotor (14), wobei der Elektromotor (14) in Drehantriebsverbindung mit dem Zahnradgetriebe (12) steht, wobei das Zahnradgetriebe (12) mit dem Steuerschieber (8) bewegungsgekoppelt ist, wobei eine Stellungserfassungseinrichtung (88) zur Erfassung einer Stellung des Steuerschiebers (8) vorgesehen ist, wobei der Grundkörper (2) zwei etwa parallele Anlageebenen (4) aufweist, und wobei eine Mittelachse (10) des Steuerschiebers (8) etwa parallel zu den Anlageebenen (4) ausgerichtet ist, **dadurch gekennzeichnet, dass** eine Antriebsachse (16) des Elektromotors (14) etwa parallel zu der Mittelachse (10) ausgerichtet ist, und dass das Zahnradgetriebe (12), der Elektromotor (14) und eine Zahnstange (22) zwischen den beiden Anlageebenen (4) angeordnet sind.

2. Ventilscheibe nach Anspruch 1, wobei die Stellungserfassungseinrichtung (88) und der als ein Gleichstrommotor ausgebildete Elektromotor (14) an eine zwischen den Anlageebenen (4) angeordnete Lageregeleinrichtung (20) für den Steuerschieber (8) angeschlossen sind.

3. Ventilscheibe nach einem der Ansprüche 1 oder 2, wobei die Antriebsachse (16) des Elektromotors (14) in einer etwa parallel zu der Anlageebene (4) ausgerichteten Ebene der Mittelachse (10) liegt.

4. Ventilscheibe nach Anspruch 3, wobei das Zahnradgetriebe (12) ein an dem Elektromotor (14) angebrachtes und um die Antriebsachse (16) drehbares erstes Eingangszahnrand (56), ein damit in Eingriff befindliches zweites Eingangszahnrad (58) und ein mit dem zweiten Eingangszahnrad (58) drehfest verbundenes drittes Eingangszahnrad (60) aufweist, wobei das zweite Eingangszahnrad (58) um eine etwa senkrecht zur Mittelachse (10) und/oder den Anlageebenen (4) ausgerichtete dritte Drehachse (62) drehbar ist.

5. Ventilscheibe nach Anspruch 4, wobei das Zahnradgetriebe (12) ein erstes Ausgangszahnrad (34), ein zweites Ausgangszahnrad (40) und ein drittes Ausgangszahnrad (46) aufweist, die derart miteinander drehfest verbunden sind, dass sie zusammen um eine etwa senkrecht zur Mittelachse (10) und/oder den Anlageebenen (4) ausgerichtete gemeinsame erste Drehachse (38) drehbar sind, wobei das dritte Ausgangszahnrad (46) mit dem dritten Eingangszahnrad (60) in Eingriff ist.

6. Ventilscheibe nach Anspruch 5, wobei das erste Ausgangszahnrad (34) und ein erstes Gegenzahnrad (36) des Zahnradgetriebes (12) mit einer Verzahnung (24) der über eine biegeelastische Koppelstange (26) drehfest mit dem Steuerschieber (8) verbundenen Zahnstange (22) in Eingriff sind, das erste Gegenzahnrad (36) derart mit einem zweiten Gegenzahnrad (42) des Zahnradgetriebes (12) drehfest verbunden ist, dass sie zusammen um eine gemeinsame zweite Drehachse (44) drehbar sind, die Drehachsen (38, 44) etwa parallel zueinander ausgerichtet auf gegenüberliegenden Seiten der Zahnstange (22) achsensymmetrisch zur Mittelachse (10) angeordnet sind, und das zweite Ausgangszahnrad (40) mit dem zweiten Gegenzahnrad (42) in Eingriff ist.

7. Ventilscheibe nach einem der Ansprüche 1 bis 5, wobei eine Koppelstange (26) und die Zahnstange (22) etwa in einer Flucht mit der Mittelachse (10) des Steuerschiebers (8) angeordnet sind und der Elektromotor (14) benachbart zu der Koppelstange (26) angeordnet ist.

8. Ventilscheibe nach einem der Ansprüche 5 bis 7, wobei die Stellungserfassungseinrichtung (88) mindestens einen Permanentmagnet (90) und mindestens einen nach dem Hall- oder dem AMR-Prinzip arbeitenden Sensor (92) enthält, wobei der Permanentmagnet (90) mit dem zweiten Ausgangszahnrad (40), dem dritten Ausgangszahnrad (46), dem ersten Ausgangszahnrad (34), dem ersten Gegenzahnrad (36), dem zweiten Gegenzahnrad (42) und/oder der Koppelstange (26) drehfest verbunden ist, und wobei der Sensor (92) in einer zum Detektieren einer Richtung eines magnetischen Feldes des Permanentmagneten (90) geeigneten Lage und Entfernung zu dem Permanentmagneten (90) angeordnet ist.

9. Ventilscheibe nach Anspruch 8, wobei der Sensor (92) auf einer Platine angeordnet ist, die auch die Lageregeleinrichtung (20) enthält, wobei die Platine zwischen den Anlageebenen (4) angeordnet und etwa parallel zu diesen ausgerichtet ist.

10. Ventilscheibe nach Anspruch 8 oder 9, wobei mindestens eine etwa parallel zu den Anlageebenen (4) ausgerichtete Abschirmplatte (94) mit einer magnetischen Permeabilität zwischen 50.000 und 140.000 derart zwischen den Anlageebenen (4) angeordnet ist, dass ein von außen auf den Sensor (92) wirkendes magnetisches Feld abgeschirmt ist.

11. Ventilscheibe nach einem der Ansprüche 1 bis 10, wobei ein Gehäuse (64) vorgesehen ist, das den Elektromotor (14) und das Zahnradgetriebe (12) umschließt, wobei das Gehäuse (64) mit dem Grundkörper (2) verbunden ist und das Gehäuse (64) zwei gegenüberliegende Anlageflächen (66) aufweist, die mit den Anlageebenen (4) etwa in einer Ebene liegen.

12. Ventilblock (10) mit mehreren Ventilscheiben (1) nach einem der Ansprüche 1 bis 11, wobei die Anlageebenen (4) unmittelbar benachbarter Ventilscheiben (1) zusammenfallen.

## Claims

1. Valve plate having a main body (2), in which a control slide (8) is received movably, and having a gearwheel mechanism (12), and having an electric motor (14), the electric motor (14) being rotationally drive-connected to the gearwheel mechanism (12), the gearwheel mechanism (12) being movement-coupled to the control slide (8), a position detection device (88) being provided for detecting a position of the control slide (8), the main body (2) having two approximately parallel bearing planes (4), and a centre axis (10) of the control slide (8) being oriented approximately parallel to the bearing planes (4), **characterized in that** a drive axis (16) of the electric motor (14) is oriented approximately parallel to the centre axis (10), and **in that** the gearwheel mechanism (12), the electric motor (14) and a rack (22) are arranged between the two bearing planes (4).

2. Valve plate according to Claim 1, the position detection device (88) and the electric motor (14) which is configured as a DC motor being connected to a positional regulating device (20) for the control slide (8), which positional regulating device (20) is arranged between the bearing planes (4).

3. Valve plate according to either of Claims 1 and 2, the drive axis (16) of the electric motor (14) lying in a plane of the centre axis (10), which plane is oriented approximately parallel to the bearing plane (4) .

4. Valve plate according to Claim 3, the gearwheel mechanism (12) having a first input gearwheel (56) which is attached to the electric motor (14) and can be rotated about the drive axis (16), a second input gearwheel (58) which is in engagement with the said first input gearwheel (56), and a third input gearwheel (60) which is connected fixedly to the second input gearwheel (58) so as to rotate with it, it being possible for the second input gearwheel (58) to be rotated about a third rotational axis (62) which is oriented approximately perpendicularly with respect to the centre axis (10) and/or the bearing planes (4).

5. Valve plate according to Claim 4, the gearwheel mechanism (12) having a first output gearwheel (34), a second output gearwheel (40) and a third output gearwheel (46) which are connected fixedly to one another so as to rotate together in such a way that they can be rotated together about a common first rotational axis (38) which is oriented approximately perpendicularly with respect to the centre axis (10) and/or the bearing planes (4), the third output gearwheel (46) being in engagement with the third input gearwheel (60).

6. Valve plate according to Claim 5, the first output gearwheel (34) and a first corresponding gearwheel (36) of the gearwheel mechanism (12) being in engagement with a toothing system (24) of the rack (22) which is connected fixedly to the control slide (8) so as to rotate with it via a resiliently flexible coupling rod (26), the first corresponding gearwheel (36) being connected fixedly to a second corresponding gearwheel (42) of the gearwheel mechanism (12) in such a way that they can be rotated together about a common second rotational axis (44), the rotational axes (38, 44) being arranged axially symmetrically with respect to the centre axis (10) on opposite sides of the rack (22) such that they are oriented approximately parallel to one another, and the second output gearwheel (40) being in engagement with the second corresponding gearwheel (42) .

7. Valve plate according to one of Claims 1 to 5, a coupling rod (26) and the rack (22) being arranged approximately aligned with the centre axis (10) of the control slide (8), and the electric motor (14) being arranged adjacently with respect to the coupling rod (26) .

8. Valve plate according to one of Claims 5 to 7, the position detection device (88) comprising at least one permanent magnet (90) and at least one sensor (92) which operates in accordance with the Hall principle or the AMR principle, the permanent magnet (90) being connected fixedly to the second output gearwheel (40), the third output gearwheel (46), the first output gearwheel (34), the first corresponding gearwheel (36), the second corresponding gearwheel (42) and/or the coupling rod (26) so as to rotate with them/it, and the sensor (92) being arranged at a distance from the permanent magnet (90) and a position which is suitable for detecting a direction of a magnetic field of the permanent magnet (90).

9. Valve plate according to Claim 8, the sensor (92) being arranged on a printed circuit board which also comprises the positional regulating device (20), the printed circuit board being arranged between the bearing planes (4) and being oriented approximately parallel to the latter.

10. Valve plate according to Claim 8 or 9, at least one shielding plate (94) which is oriented approximately parallel to the bearing planes (4) and has a magnetic permeability between 50 000 and 140 000 being arranged between the bearing planes (4) in such a way that a magnetic field which acts on the sensor (92) from the outside is shielded.

11. Valve plate according to one of Claims 1 to 10, a housing (64) being provided which encloses the electric motor (14) and the gearwheel mechanism (12), the housing (64) being connected to the main body (2), and the housing (64) having two bearing faces (66) which lie opposite one another and lie approximately in one plane with the bearing planes (4).

12. Valve block (10) having a plurality of valve plates (1) according to one of Claims 1 to 11, the bearing planes (4) of immediately adjacent valve plates (1) coinciding.

## Revendications

1. Disque de soupape comprenant un corps de base (2) dans lequel est reçu de manière déplaçable un coulisseau de commande (8), et comprenant un engrenage à roue dentée (12), et comprenant un moteur électrique (14), le moteur électrique (14) étant en liaison d'entraînement en rotation avec l'engrenage à roue dentée (12), l'engrenage à roue dentée (12) étant accouplé de manière mobile au coulisseau de commande (8), un dispositif de détection de position (88) étant prévu pour détecter une position du coulisseau de commande (8), le corps de base (2) présentant deux plans d'appui approximativement parallèles (4) et un axe médian (10) du coulisseau de commande (8) étant orienté approximativement parallèlement aux plans d'appui (4),
**caractérisé en ce qu'**un axe d'entraînement (16) du moteur électrique (14) est orienté approximativement parallèlement à l'axe médian (10), et **en ce que** l'engrenage à roue dentée (12), le moteur électrique (14) et une crémaillère (22) sont disposés entre les deux plans d'appui (4).

2. Disque de soupape selon la revendication 1, dans lequel le dispositif de détection de position (88) et le moteur électrique (14) réalisé sous forme de moteur à courant continu sont raccordés à un dispositif de réglage de position (20) pour le coulisseau de commande (8), disposé entre les plans d'appui (4).

3. Disque de soupape selon l'une quelconque des revendications 1 ou 2, dans lequel l'axe d'entraînement (16) du moteur électrique (14) est situé dans un plan de l'axe médian (10) orienté approximativement parallèlement au plan d'appui (4) .

4. Disque de soupape selon la revendication 3, dans lequel l'engrenage à roue dentée (12) présente une première roue dentée d'entrée (56) montée sur le moteur électrique (14) et pouvant tourner autour de l'axe d'entraînement (16), une deuxième roue dentée d'entrée (58) se trouvant en prise avec celle-ci et une troisième roue dentée d'entrée (60) connectée de manière solidaire en rotation à la deuxième roue dentée d'entrée (58), la deuxième roue dentée d'entrée (58) pouvant tourner autour d'un troisième axe de rotation (62) orienté approximativement perpendiculairement à l'axe médian (10) et/ou aux plans d'appui (4).

5. Disque de soupape selon la revendication 4, dans lequel l'engrenage à roue dentée (12) présente une première roue dentée de sortie (34), une deuxième roue dentée de sortie (40) et une troisième roue dentée de sortie (46) qui sont connectées de manière solidaire en rotation les unes aux autres, de telle sorte qu'elles puissent tourner ensemble autour d'un premier axe de rotation commun (38) orienté approximativement perpendiculairement à l'axe médian (10) et/ou aux plans d'appui (4), la troisième roue dentée de sortie (46) étant en prise avec la troisième roue dentée d'entrée (60).

6. Disque de soupape selon la revendication 5, dans lequel la première roue dentée de sortie (34) et une première roue dentée conjuguée (36) de l'engrenage à roue dentée (12) sont en prise avec une denture (24) de la crémaillère (22) connectée de manière solidaire en rotation au coulisseau de commande (8) par le biais d'une tige d'accouplement élastique en flexion (26), la première roue dentée conjuguée (36) étant connectée de manière solidaire en rotation à une deuxième roue dentée conjuguée (42) de l'engrenage à roue dentée (12) de telle sorte qu'elles puissent tourner ensemble autour d'un deuxième axe de rotation commun (44), les axes de rotation (38, 44) orientés approximativement parallèlement l'un à l'autre sur des côtés opposés de la crémaillère (22) étant disposés avec une symétrie axiale par rapport à l'axe médian (10), et la deuxième roue dentée de sortie (40) étant en prise avec la deuxième roue dentée conjuguée (42).

7. Disque de soupape selon l'une quelconque des revendications 1 à 5, dans lequel une tige d'accouplement (26) et la crémaillère (22) sont disposées approximativement en affleurement avec l'axe médian (10) du coulisseau de commande (8) et le moteur électrique (14) est disposé à côté de la tige d'accouplement (26).

8. Disque de soupape selon l'une quelconque des revendications 5 à 7, dans lequel le dispositif de détection de position (88) contient au moins un aimant permanent (90) et au moins un capteur (92) fonctionnant selon le principe de Hall ou AMR, l'aimant permanent (90) étant connecté de manière solidaire en rotation à la deuxième roue dentée de sortie (40), à la troisième roue dentée de sortie (46), à la première roue dentée de sortie (34), à la première roue dentée conjuguée (36), à la deuxième roue dentée conjuguée (42) et/ou à la tige d'accouplement (26), et le capteur (92) étant disposé dans une position appropriée pour détecter une direction d'un champ magnétique de l'aimant permanent (90) et un éloignement de l'aimant permanent (90).

9. Disque de soupape selon la revendication 8, dans lequel le capteur (92) est disposé sur une platine qui contient également le dispositif de réglage de position (20), la platine étant disposée entre les plans d'appui (4) et étant orientée approximativement parallèlement à ceux-ci.

10. Disque de soupape selon la revendication 8 ou 9, dans lequel au moins une plaque de blindage (94) orientée approximativement parallèlement au plan d'appui (4) est disposée avec une perméabilité magnétique entre 50 000 et 140 000 entre les plans d'appui (4) de telle sorte qu'un champ magnétique agissant de l'extérieur sur le capteur (92) soit protégé.

11. Disque de soupape selon l'une quelconque des revendications 1 à 10, dans lequel un boîtier (64) est prévu, lequel entoure le moteur électrique (14) et l'engrenage à roue dentée (12), le boîtier (64) étant connecté au corps de base (2) et le boîtier (64) présentant deux surfaces d'appui opposées (66) qui sont situées avec les plans d'appui (4) approximativement dans un même plan.

12. Bloc soupape (10) comprenant plusieurs disques de soupape (1) selon l'une quelconque des revendications 1 à 11, les plans d'appui (4) de disques de soupape (1) immédiatement adjacents étant coïncidents.
